# FASCICULE DE BREVET EUROPEEN

(11) **EP 1 099 579 B1**
(45) Date de publication et mention de la délivrance du brevet: **01.08.2007**
(21) Numéro de dépôt: 00460063.1
(22) Date de dépôt: 10.11.2000
(51) Int. Cl.: B60J 1/20

(54) **Store à enrouleur, notamment pour véhicle automobile, couvercle de protection et procédé de montage correspondants**
Rollo, insbesonderau für Autos, Schutzabdeckung und Montageverfahren hierzu
Roller blind, particularly for vehicles, protective cover and method of assembly therefore

(30) Priorité: 12.11.1999 FR 9914477
(43) Date de publication de la demande: 16.05.2001
(73) Titulaire: WAGON SAS, 79300 Bressuire (FR)
(72) Inventeur: Jolivet, M. David, 79300 Bressuire (FR)
(74) Mandataire: Vidon, Patrice

(56) Documents cités:
- DE-A- 3 415 904
- DE-C- 4 202 081
- US-A- 5 468 040

## Description

Le domaine de l'invention est celui des stores à enrouleur, notamment pour véhicules automobiles. Plus précisément, l'invention concerne des stores destinés à être rapportés sous un élément du véhicule formant support, tel qu'une tablette arrière ou un habillage de porte, afin d'équiper respectivement la lunette arrière ou la fenêtre de la portière latérale de ce véhicule.

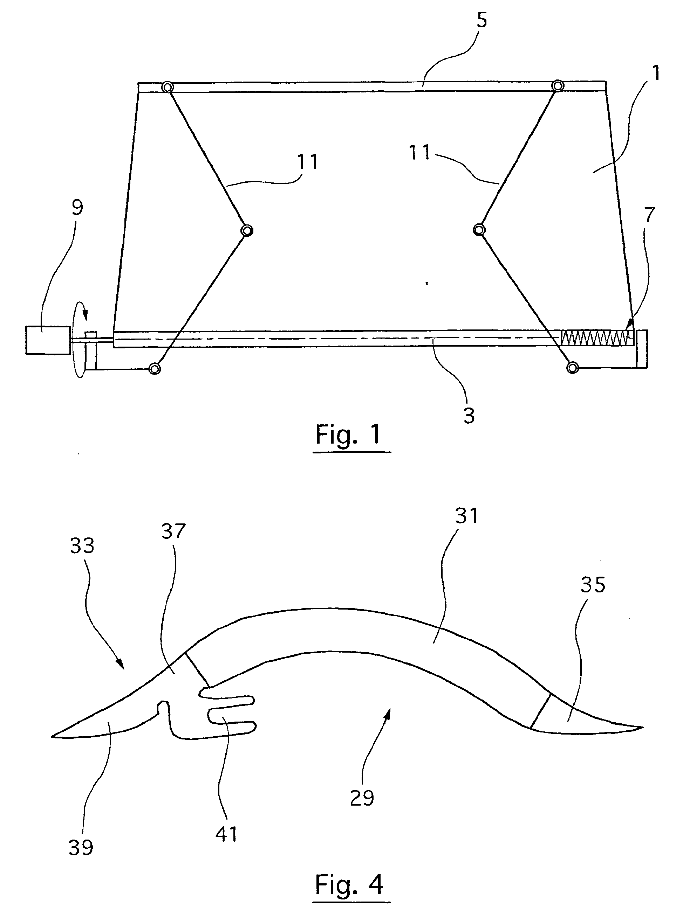

Classiquement, et comme illustré sur la figure 1 jointe, un store à enrouleur comprend un rideau ou toile 1, formant écran en position déployée. L'une des extrémités de cette toile 1 est montée sur un rouleau ou tube d'enroulement 3, mobile en rotation. L'autre extrémité de la toile est munie d'une barre de tirage 5. L'ensemble de ces éléments peut être monté dans un boîtier (non représenté en figure 1), muni d'une fente de guidage au travers de laquelle peut se déplacer la toile 1. En position reployée, la toile est essentiellement enroulée autour du tube d'enroulement 3 et la barre de tirage 5 se trouve donc au voisinage de ce tube.

Dans certains cas, le store est actionné manuellement, et l'utilisateur agit alors sur la barre de tirage, de façon à l'éloigner du tube d'enroulement et à déployer la toile. Le reploiement est alors obtenu par l'action d'un ressort de rappel 7 entraînant le rouleau d'entraînement. Dans d'autres cas, le store est motorisé et présente alors en outre un moteur 9 entraînant la rotation du tube d'enroulement 3 ou le déplacement de biellettes ou leviers de guidage 11 de ladite barre de tirage.

Il apparaît cependant que de la poussière et de petits objets peuvent pénétrer dans le boîtier par la fente de guidage et bloquer ou détériorer l'ensemble du mécanisme. Pour remédier à ce problème, une solution de l'art antérieur consiste à utiliser une barre de tirage suffisamment large pour recouvrir la fente de guidage lorsque la toile est repliée, mais la conception et le fonctionnement du dispositif sont alors plus complexes car la barre de tirage joue un double rôle.

De plus, lorsque la toile a une forme trapézoïdale (comme cela est le cas sur certains modèles de véhicules), la barre de tirage correspondant au petit côté du trapèze, les extrémités de la fente de guidage ne sont pas fermées.

En outre, cette solution est rarement esthétique, ni ergonomique. En effet, lorsque la toile du store n'est pas déployée, il est souhaitable que la tablette arrière ou l'habillage de porte présente l'aspect le plus lisse et le plus plat possible, sans aucun élément faisant saillie.

On connait également, du document DE 4202081 C1 un boîtier de store équipé d'un couvercle articulé, ce document comportant toutes les caractéristiques du préambule de la revendication 1. Le store à enrouleur connu du DE 42 02 081 C1 comportant un couvercle, qui est une partie du mécanisme pour enrouler le store.

Par ailleurs, il est souhaitable, notamment dans les véhicules haute gamme, que la couleur ou l'aspect de la barre de tirage soit la plus proche de celle du revêtement de l'habitacle du véhicule. Avec la première solution de l'art antérieur, il est donc nécessaire de fabriquer autant de type de stores que d'intérieurs de véhicules existants, ce qui est évidemment beaucoup plus coûteux et complexe à gérer.

Le mécanisme connu du DE 42 02 081 C1 est compliqué et coûteux.

En conséquence, l'invention a notamment pour objectif de pallier ces différents inconvénients de l'art antérieur.

Plus précisément, un objectif de l'invention est de fournir un store à enrouleur moins compliqué et coûteux, et plus généralement une technique de réalisation et de montage correspondants, qui soit aisément et efficacement assorti à la garniture intérieure du véhicule, et notamment de l'élément supportant le store (par exemple une tablette arrière).

En d'autres termes, l'invention a pour objectif de fournir un store présentant de bonnes qualités esthétiques et ergonomiques, notamment par rapport à son support.

Un autre objectif de l'invention est de permettre une fabrication, un stockage et un montage simples et peu coûteux de tels stores, malgré la contrainte esthétique mentionnée ci-dessus.

L'invention a également pour objectif de fournir un tel store à enrouleur, qui soit fiable, et en particulier qui ne risque pas de se détériorer rapidement (lutte contre les détériorations dues à la poussière ou à la présence d'objets introduits par inadvertance à l'intérieur du boîtier du store,...).

Encore un autre objectif de l'invention est de fournir un tel store, qui réduise les nuisances dues au bruit ou aux odeurs.

Ces objectifs, ainsi que d'autres qui apparaîtront par la suite, sont atteints à l'aide d'un store à enrouleur selon la revendication 1.

Ainsi, lorsque le couvercle est en position fermée, il empêche la poussière, des objets fins ou coupants de se glisser à travers la fente de guidage et d'entraîner une détérioration du rideau ou du mécanisme d'enroulement ou des nuisances dues aux bruits ou aux odeurs de ces objets. Par ailleurs, comme le couvercle est rapporté sur l'élément support, il reste positionné correctement par rapport à la fente de guidage ce qui n'était pas toujours le cas avec le dispositif de l'art antérieur où la barre de tirage constituait le couvercle.

De plus, le couvercle peut être indépendant du store, ce qui permet de simplifier la fabrication et le montage : on prévoit un seul type de boîtier de store (partie non visible), et une série de couvercles différents, adaptés aux différents intérieurs de véhicule.

On obtient ainsi un mode de réalisation simple et efficace.

La partie souple du couvercle peut avantageusement présenter une gorge longitudinale destinée à être encliquetée sur l'une des ailes de fixation du boîtier, prévues pour prendre appui sur les bords de ladite ouverture.

Le boîtier du store est donc monté préalablement, et le choix du couvercle adapté se fait plus tard, à la fin de la construction du véhicule, lorsque le coloris de la tablette ou du support est connu. Le montage est simple, et un démontage est possible si nécessaire.

Préférentiellement, la partie souple du couvercle forme une lèvre longitudinale arrière assurant un contact étanche entre la partie rigide du couvercle et l'élément support, et présente, sur son côté longitudinal opposé au côté portant l'articulation, une lèvre longitudinale souple avant assurant un contact étanche entre ledit couvercle et l'élément support.

Le store de l'invention est avantageusement motorisé, l'actionnement dudit rideau rétractable entraînant alors simultanément l'ouverture et la fermeture dudit couvercle.

Dans ce cas, le store peut comprendre au moins un levier d'entraînement et/ou de guidage, contre lequel prend appui ledit couvercle de protection lors du déploiement dudit rideau.

Comme déjà mentionné, ledit couvercle est avantageusement assorti à la partie visible dudit élément formant support, et/ou plus généralement à l'intérieur du véhicule.

Selon un mode de réalisation avantageux de l'invention, ledit couvercle est constitué d'une seule pièce obtenue par extrusion présentant au moins deux parties présentant des duretés différentes.

Avantageusement, ledit couvercle est réalisé en matière plastique teintée dans la masse.

L'invention concerne également le couvercle de protection tel que décrit ci-dessus, en tant que tel, ainsi que le procédé de montage d'un store à enrouleur correspondant.

Ce procédé de montage comprend les étapes de :
- montage du boîtier du store sous l'élément du véhicule formant support (un seul type de boîtier étant réalisé) ;
- montage du couvercle de protection au-dessus de l'ouverture ménagée dans ledit élément formant support (autant de types de couvercles que nécessaire étant réalisés).

Préférentiellement, ladite étape de montage du boîtier comprend le clipage des ailes de fixation du boîtier sur les bords de l'ouverture dudit élément support. Par ailleurs, avantageusement, ladite étape de montage du couvercle comprend l'encliquetage dudit couvercle sur l'extrémité dudit boîtier.

D'autres caractéristiques et avantages de l'invention apparaîtront plus clairement à la lecture de la description suivante d'un mode de réalisation préférentiel de l'invention, donné à titre d'exemple illustratif et non limitatif, cette description étant faite en faisant référence aux dessins joints, dans lesquels :
- la figure 1 est une vue schématique de face d'un store à enrouleur, de type connu en soi ;
- les figures 2 et 3 sont des vues en coupe du store selon l'invention avec le rideau rétractable respectivement en position enroulée ou partiellement déployée, et
- la figure 4 est une vue agrandie du couvercle de protection du store selon l'invention.

Comme expliqué plus haut, l'invention propose la réalisation d'un couvercle de store, pouvant être réalisé et monté indépendamment du boîtier. Grâce à ces caractéristiques de l'invention, on peut continuer à fabriquer une seul modèle de store pour un véhicule donné, le boîtier et la barre de tirage de ce store étant d'un coloris unique et ce boîtier pouvant être installé directement sur la chaîne de montage du véhicule. Seuls les couvercles de protection sont fabriqués avec de multiples coloris assortis à l'habillage intérieur du véhicule ou à la couleur de la tablette arrière et sont encliquetés sur le boîtier après le montage de ce dernier. Ceci permet de simplifier la gestion des stocks de stores.

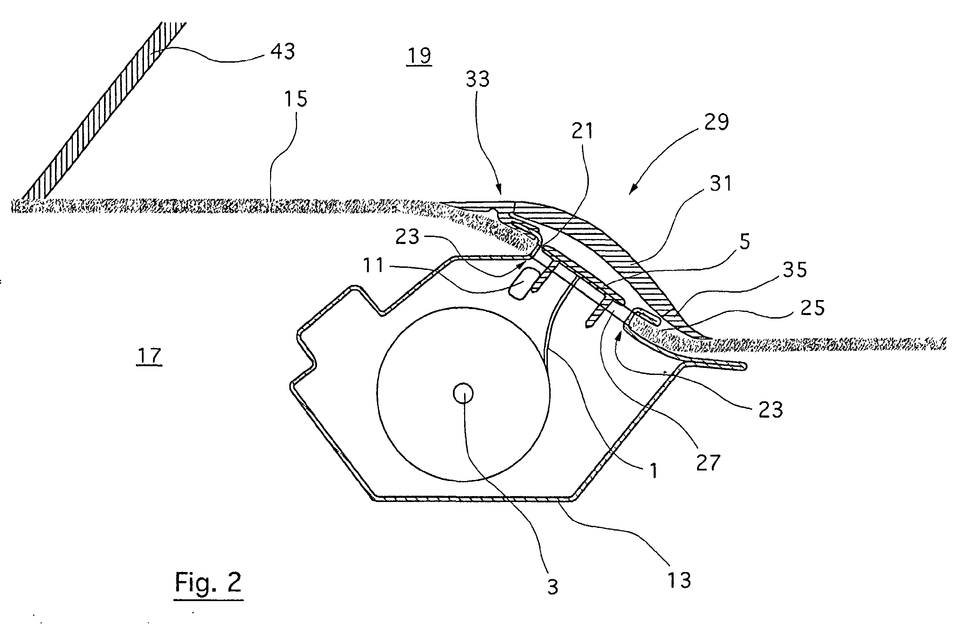

Comme illustré en figure 2, le store selon l'invention comprend un boîtier 13 contenant au moins une partie du mécanisme d'enroulement du rideau rétractable 1. Ce boîtier est positionné sous un élément 15 du véhicule formant support, c'est à dire par exemple, la tablette arrière d'un véhicule ou un habillage de porte latérale. Cet élément support peut ainsi séparer le coffre à bagages 17 de l'habitacle 19.

Ce boîtier 13 présente une fente de guidage 21 au travers de laquelle peut se déplacer ledit rideau 1, cette fente de guidage étant délimitée de part et d'autre par deux ailes de fixation 23 destinées à prendre appui sur les bords 25 d'une ouverture 27 ménagée à cet effet dans ledit élément support 15. Ce boîtier est généralement réalisé dans un matériau présentant une certaine élasticité de façon à pouvoir être déformé pour rapprocher les deux ailes 23 l'une de l'autre lors de l'introduction du boîtier 13 dans l'ouverture 27 du support au moment du montage.

Comme expliqué précédemment, l'une des extrémités du rideau 1 est liée à un rouleau d'enroulement 3 et l'autre à la barre de tirage 5 du rideau.

Le couvercle selon l'invention, référencé d'une manière générale 29, comprend une partie centrale longitudinale rigide 31, de préférence légèrement incurvée, destinée à recouvrir en longueur, la totalité de la fente de guidage 21 et en largeur, au moins la largeur de ladite fente de guidage et mieux, également les deux ailes de fixation 23.

Le couvercle 29 présente en outre deux parties latérales souples, opposées, la première 33 constituant des moyens d'articulation du couvercle, la deuxième 35 constituant un rabat ou lèvre longitudinale avant. La référence à l'avant ou l'arrière est déterminée par rapport au sens du véhicule.

Ces deux lèvres 33 et 35 assurent l'étanchéité entre la partie rigide 31 du couvercle 29 et l'élément support 15. Elles s'étendent sur toute la longueur de la partie rigide du couvercle.

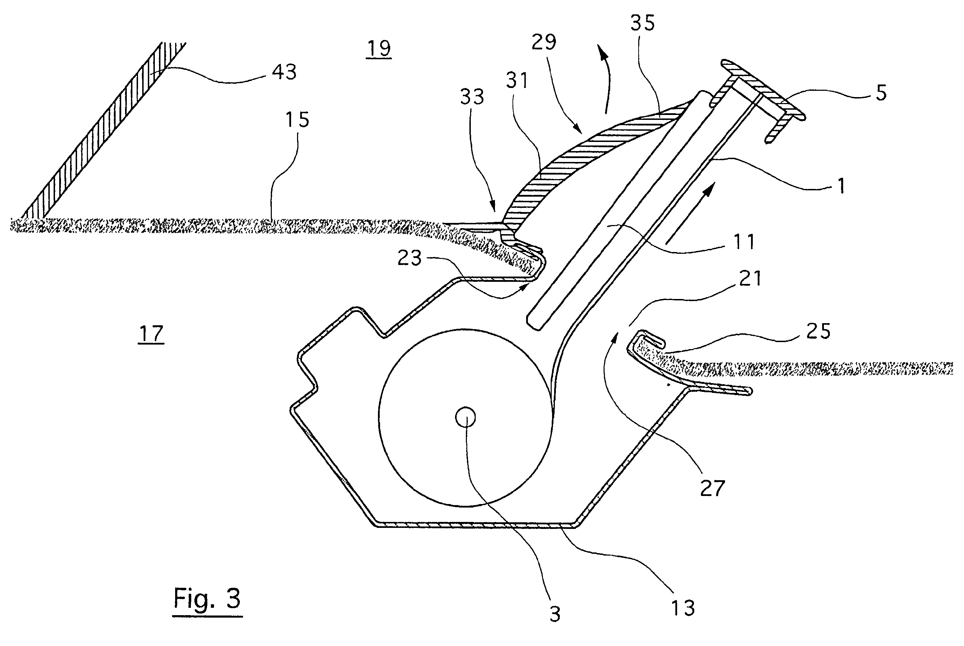

La première partie souple 33 présente trois zones (apparaissant mieux en figure 4) assurant trois fonctions différentes. La zone médiane en forme de C 37 assure la fonction d'articulation ou de charnière du couvercle. Elle est au contact de la partie rigide 31 et peut se déformer, comme illustré en figure 3, lorsque le couvercle est ouvert. Cette zone médiane en C 37 se prolonge (à gauche sur la figure 4) par une lèvre longitudinale arrière 39 assurant la même fonction que la lèvre avant 35.

Enfin, la zone médiane en C 37 se prolonge (à droite sur la figure 4) et en dessous de la partie rigide 31, par une gorge 41 destinée à être encliquetée sur l'une des ailes de fixation 23 du boîtier et à assurer ainsi la fixation du couvercle 29 (voir les figures 2 et 3). Le couvercle 29 est donc solidaire de l'élément support 15 puisqu'il est pincé entre cet élément support et l'aile 23 du boîtier.

Ainsi, en position fermée du couvercle, on obtient une étanchéité parfaite aux passages d'air entre le coffre et l'habitacle du véhicule ce qui renforce l'étanchéité déjà assurée par le boîtier. L'étanchéité aux liquides éventuellement renversés sur la tablette arrière est également assurée. En outre, le volume creux du boîtier est également fermé de façon étanche, ce qui contribue à réduire les bruits du type cliquetis et caisse de résonance. Enfin, l'aspect esthétique du couvercle se trouve amélioré.

De façon avantageuse, le couvercle 29 selon l'invention est constitué d'une seule pièce, obtenue par extrusion, présentant deux duretés différentes (une partie rigide 31, deux parties souples 33,35). Toutefois, ce couvercle pourrait également être fabriqué en deux ou trois parties distinctes, assemblées ultérieurement par des moyens appropriés.

De préférence, le couvercle est réalisé en matière plastique teintée dans la masse, ce qui permet d'obtenir tous les coloris souhaités. Plus généralement, le couvercle présente avantageusement un aspect et un coloris adapté, ou assorti, à ceux de l'élément support, et du reste du véhicule. Notamment, il peut être revêtu du même revêtement que l'élément support.

Le procédé de montage du store va maintenant être décrit plus en détail. Au cours de la fabrication du véhicule, ou à tout moment par la suite, le boîtier 13 du store est monté en dessous de l'élément support 15 en clipant les ailes de fixation 23 de ce boîtier, sur les bords 25 de l'ouverture 27 dudit élément support. Ensuite, le couvercle de protection 29 dont le coloris et/ou l'aspect sont adaptés à l'intérieur du véhicule est encliqueté sur l'une des ailes 23. De façon avantageuse, ce couvercle est monté de façon à basculer vers l'arrière du véhicule, comme illustré en figure 3 et donc à se retrouver en face de la vitre 43 du véhicule. Ainsi, il n'est pas visible depuis l'intérieur du véhicule lorsque le rideau 1 est déroulé.

Bien entendu, de nombreuses autres techniques peuvent être adaptées pour le montage du boîtier et/ou du couvercle, qui peut par exemple être également collé ou soudé. Par ailleurs, le couvercle peut être solidarisé à l'élément support. On peut également prévoir que le couvercle soit formé directement dans l'élément support.

On comprend que cette technique permet de simplifier la fabrication et le stockage des stores, qui sont tous identiques. Seuls les couvercles diffèrent, et il est possible d'en réaliser autant que nécessaire pour adapter l'esthétique du couvercle ou véhicule. On peut ainsi aisément suivre les changements de présentation au cours du temps.

Par ailleurs, en cas de détérioration accidentelle, il est facile de remplacer le couvercle, sans intervenir sur le reste du store.

Le fonctionnement du store va maintenant être expliqué en détail.

Dans le cas d'un store manuel, l'utilisateur soulève le couvercle 29 par la lèvre avant 35 et tire le rideau 1 du store par l'intermédiaire de la barre de tirage 5.

Dans le cas d'un store motorisé, tel que celui illustré en figure 1, la mise en marche du moteur 9 entraîne le déplacement vers le haut de la barre de tirage 5, comme illustré en figure 3, et c'est la barre de tirage qui soulève le couvercle de protection 29 en exerçant une pression sur sa partie rigide 31. Le couvercle se trouve alors plaqué contre la barre de tirage, puis contre les leviers de guidage 11 lorsque le rideau continue de se déployer, grâce à la force élastique du matériau de la partie souple 33, 37 formant articulation. En outre la résilience de la lèvre avant 35 favorise également le plaquage du couvercle sur le rideau. Lorsque le rideau est enroulé, le couvercle 29 se referme seul grâce à l'élasticité de la partie souple 33, 37 formant articulation.

De nombreuses variantes ou adaptations peuvent bien sûr être envisagées. On peut notamment prévoir une ou plusieurs charnières pour l'articulation du couvercle. L'ouverture et la fermeture du couvercle peuvent être indépendantes des frottements contre la barre de tirage et les biellettes, et obtenues par exemple par un élément déporté, solidaire des biellettes, ou directement du moteur.

## Revendications

1. Store à enrouleur, notamment pour véhicule, comprenant un boîtier (13) contenant au moins une partie du mécanisme d'enroulement du rideau rétractable (1) dudit store, et étant destiné à être positionné en dessous d'un élément (15) du véhicule formant support, ce boîtier présentant une fente de guidage (21) au travers de laquelle peut se déplacer ledit rideau, cette fente de guidage (21) coïncidant avec une ouverture (27) ménagée dans ledit élément support, le store à enrouleur comprenant un couvercle de protection (29) de forme allongée, destiné à être positionné au dessus dudit élément support (15) et pouvant se déplacer entre une position fermée dans laquelle il recouvre au moins ladite fente de guidage (21) et une position ouverte dans laquelle il permet le déploiement du rideau (1), **caractérisé en ce que** ledit couvercle (29) comprend une partie rigide (31) recouvrant au moins la totalité de la fente de guidage (21) du boîtier et au moins une partie souple (37) formant l'articulation du couvercle.

2. Store à enrouleur selon la revendication 1, **caractérisé en ce que** la partie souple (37) du couvercle présente une gorge longitudinale (41) destinée à être encliquetée sur l'une des ailes de fixation (23) du boîtier, prévues pour prendre appui sur les bords (25) de ladite ouverture (27).

3. Store à enrouleur selon la revendication 1 ou la revendication 2, **caractérisé en ce que** la partie souple (37) du couvercle forme une lèvre longitudinale arrière (39) assurant un contact étanche entre la partie rigide (31) du couvercle et l'élément support (15).

4. Store à enrouleur selon l'une quelconque des revendications précédentes, **caractérisé en ce que** le couvercle de protection (29) présente, sur son côté longitudinal opposé au côté portant l'articulation (37), une lèvre longitudinale souple avant (35) assurant un contact étanche entre ledit couvercle et l'élément support (15).

5. Store à enrouleur selon l'une quelconque des revendications 1 à 4, **caractérisé en ce qu'**il est motorisé, et **en ce que** l'actionnement dudit rideau rétractable (1) entraîne simultanément l'ouverture et la fermeture dudit couvercle (29).

6. Store à enrouleur selon la revendication 5, **caractérisé en ce qu'**il comprend au moins un levier d'entraînement et/ou de guidage (11), contre lequel prend appui ledit couvercle de protection (29) lors du déploiement dudit rideau.

7. Store à enrouleur selon l'une quelconque des revendications 1 à 6, **caractérisé en ce que** ledit couvercle (29) porte un revêtement, assorti à la partie visible dudit élément formant support (15).

8. Store à enrouleur selon l'une quelconque des revendications 1 à 7, **caractérisé en ce que** ledit couvercle (29) est constitué d'une seule pièce obtenue par extrusion présentant au moins deux parties (31 ; 33, 35) présentant des duretés différentes.

9. Store à enrouleur selon l'une quelconque des revendications 1 à 8, **caractérisé en ce que** ledit couvercle (29) est réalisé en matière plastique teintée dans la masse.

10. Procédé de montage d'un store à enrouleur selon l'une quelconque des revendications 1 à 9, **caractérisé en ce qu'**il comprend les étapes de :
- montage du boîtier (13) du store sous l'élément (15) du véhicule formant support.
- montage du couvercle de protection (29) au-dessus de l'ouverture (27) ménagée dans ledit élément (15) formant support.

11. Procédé de montage selon la revendication 10, **caractérisé en ce que** ladite étape de montage du boîtier (13) comprend le clipage des ailes de fixation (23) du boîtier sur les bords (25) de l'ouverture dudit élément support,

12. Procédé de montage selon l'une quelconque des revendications 10 et 11, **caractérisé en ce que** ladite étape de montage du couvercle (29) comprend l'encliquetage dudit couvercle sur l'extrémité (23) dudit boîtier.

## Claims

1. Roller blind, particularly for a motor vehicle, comprising a housing (13) containing at least part of the winding mechanism of the retractable curtain (1) of the said blind, and being intended to be positioned below an element (15) of the vehicle forming a support, this housing having a guide slot (21) through which the said curtain can move, this guide slot (21) coinciding with an opening (27) provided in the said support element, the roller blind comprising a protective cover (29) of elongated shape, intended to be positioned above the said support element (15) and capable of moving between a closed position in which it covers at least the said guide slot (21) and an open position in which it permits the deployment of the curtain (1), **characterised in that** the said cover (29) comprises a rigid part (31) covering at least the whole of the guide slot (21) of the housing and at least one flexible part (37) forming the articulation of the cover.

2. Roller blind according to Claim 1, **characterised in that** the flexible part (37) of the cover has a longitudinal groove (41) intended to be locked onto one of the fastening flanges (23) of the housing, which are provided for bearing on the edges (25) of the said opening (27).

3. Roller blind according to Claim 1 or Claim 2, **characterised in that** the flexible part (37) of the cover forms a rear longitudinal lip (39) ensuring a tight contact between the rigid part (31) of the cover and the support element (15).

4. Roller blind according to any one of the preceding claims, **characterised in that** the protective cover (29) has, on its longitudinal side opposite the side bearing the articulation (37), a front flexible longitudinal lip (35) ensuring a tight contact between the said cover and the support element (15).

5. Roller blind according to any one of Claims 1 to 4, **characterised in that** it is motor-driven, and **in that** the actuation of the said retractable curtain (1) brings about simultaneously the opening and closure of the said cover (29).

6. Roller blind according to Claim 5, **characterised in that** it comprises at least one driving and/or guiding lever (11), against which the said protective cover (29) bears during the deployment of the said curtain.

7. Roller blind according to any one of Claims 1 to 6, **characterised in that** the said cover (29) bears a coating, matched to the visible part of the said element forming a support (15).

8. Roller blind according to any one of Claims 1 to 7, **characterised in that** the said cover (29) consists of a single piece obtained by extrusion having at least two parts (31; 33, 35) possessing different hardness.

9. Roller blind according to any one of Claims 1 to 8, **characterised in that** the said cover (29) is produced from plastic dyed in the mass.

10. Method for mounting a roller blind according to any one of Claims 1 to 9, **characterised in that** it comprises the steps of:
- mounting the housing (13) of the blind under the element (15) of the vehicle forming a support;
- mounting the protective cover (29) above the opening (27) provided in the said element (15) forming a support.

11. Mounting method according to Claim 10, **characterised in that** the said step of mounting the housing (13) comprises clipping the fastening flanges (23) of the housing onto the edges (25) of the opening of the said support element.

12. Mounting method according to either one of Claims 10 and 11, **characterised in that** the said step of mounting the cover (29) comprises locking the said cover onto the end (23) of the said housing.

## Patentansprüche

1. Rollo, insbesondere für Fahrzeuge, das ein Gehäuse (13) umfasst, das mindestens einen Teil des Aufwickelmechanismus für den einziehbaren Vorhang (1) des Rollos enthält und dazu dient, unterhalb eines Elements (15) des Fahrzeugs positioniert zu werden, das als Träger dient, wobei das Gehäuse einen Führungsschlitz (21) aufweist, in dem sich der Vorhang bewegen kann, wobei der Führungsschlitz (21) mit einer Öffnung (27) im Trägerelement zusammenfällt; wobei das Rollo eine Schutzabdeckung (29) in länglicher Form umfasst, die dazu dient, oberhalb des Trägerelements (15) positioniert zu werden, und die eine geschlossene Stellung, in der sie mindestens den Führungsschlitz (21) abdeckt, und eine offene Stellung, in der sie das Ausfahren des Vorhangs (1) ermöglicht, einnehmen kann,
**dadurch gekennzeichnet, dass** die Abdeckung (29) einen starren Teil (31) umfasst, der mindestens den gesamten Führungsschlitz (21) des Gehäuses abdeckt, und mindestens einen flexiblen Teil (37), der das Scharnier der Abdeckung bildet, umfasst.

2. Rollo nach Anspruch 1,
**dadurch gekennzeichnet, dass** der flexible Teil (37) der Abdeckung eine längliche Hohlkehle (41) aufweist, die zum Einrasten in einem der Befestigungsflügel (23) des Gehäuses, die zum Abstützen auf den Rändern (25) der Öffnung (27) bestimmt sind, dient.

3. Rollo nach Anspruch 1 bzw. Anspruch 2,
**dadurch gekennzeichnet, dass** der flexible Teil (37) der Abdeckung eine längliche hintere Lippe (39) bildet, die eine dichte Passung zwischen dem starren Teil (31) der Abdeckung und dem Trägerelement (15) gewährleistet.

4. Rollo nach einem der vorhergehenden Ansprüche,
**dadurch gekennzeichnet, dass** die Schutzabdeckung (29) an der Längsseite gegenüber der Scharnierseite (37) eine längliche, flexible, vordere Lippe (35) aufweist, die eine dichte Passung zwischen der Abdeckung und dem Trägerelement (15) gewährleistet.

5. Rollo nach einem der Ansprüche 1 bis 4,
**dadurch gekennzeichnet, dass** dieses motorisiert ist und die Betätigung des einziehbaren Vorhangs (1) gleichzeitig das Öffnen und Schließen der Abdeckung (29) auslöst.

6. Rollo nach Anspruch 5,
**dadurch gekennzeichnet, dass** dieses mindestens einen Antriebs- und/oder Führungshebel (11) umfasst, auf dem sich die Schutzabdeckung (29) beim Ausfahren des Vorhangs abstützt.

7. Rollo nach einem der Ansprüche 1 bis 6,
**dadurch gekennzeichnet, dass** die Abdeckung (29) eine Verkleidung trägt, die an den sichtbaren Teil des Trägerelements (15) angepasst ist.

8. Rollo nach einem der Ansprüche 1 bis 7,
**dadurch gekennzeichnet, dass** die Abdeckung (29) aus einem durch Extrusion hergestellten Werkstück besteht, das mindestens zwei Teile (31, 33, 35) mit unterschiedlichen Härten aufweist.

9. Rollo nach einem der Ansprüche 1 bis 8,
**dadurch gekennzeichnet, dass** die Abdeckung (29) aus in der Masse gefärbtem Kunststoff besteht.

10. Montageverfahren für ein Rollo nach einem der Ansprüche 1 bis 9,
**dadurch gekennzeichnet, dass** es folgende Phasen umfasst:
- Montage des Gehäuses (13) des Rollos unter dem Element (15) des Fahrzeugs, das als Träger dient.
- Montage der Schutzabdeckung (29) oberhalb der Öffnung (27) im Element (15), das als Träger dient.

11. Montageverfahren nach Anspruch 10,
**dadurch gekennzeichnet, dass** die Phase der Montage des Gehäuses (13) das Einrasten der Befestigungsflügel (23) des Gehäuses auf den Rändern (25) der öffnung des Trägerelements umfasst.

12. Montageverfahren nach einem der Ansprüche 10 und 11,
**dadurch gekennzeichnet, dass** die Phase der Montage der Abdeckung (29) das Einrasten der Abdeckung am Ende (23) des Gehäuses umfasst.
